# EUROPÄISCHE PATENTSCHRIFT

(11) **EP 2 872 686 B1**
(45) Veröffentlichungstag und Bekanntmachung des Hinweises auf die Patenterteilung: **06.04.2016**
(21) Anmeldenummer: 13770503.4
(22) Anmeldetag: 02.07.2013
(51) Int. Cl.: D06F 58/22

(54) **WÄSCHETROCKNUNGSGERÄT MIT EINER FLUSENRÜCKHALTEVORRICHTUNG**
TUMBLE DRIER WITH A LINT TRAP
SÈCHE-LINGE AVEC UN DISPOSITIF DE RETENUE DE PELUCHES

(30) Priorität: 11.07.2012 US 201213546070
(43) Veröffentlichungstag der Anmeldung: 20.05.2015
(73) Patentinhaber: BSH Hausgeräte GmbH, 81739 München (DE)
(72) Erfinder: BÖMMELS, Ralf, 14612 Falkensee (DE); GEMÜNDEN, Bernd, 82041 Oberhaching (DE); HESS, Jürgen, 13581 Berlin (DE); PROSEANIC, Vladimir, West Bloomfield, MI 48324 (US); VISNEPOLSCHI, Svetlana, West Boomfield, MI 48324 (US)
(86) Internationale Anmeldenummer: PCT/IB2013/055410
(87) Internationale Veröffentlichungsnummer: WO 2014/009851

(56) Entgegenhaltungen:
- EP-A1- 0 535 348
- EP-A1- 2 559 805
- EP-A2- 2 202 348
- EP-A2- 2 202 349
- DE-A1- 19 739 378

## Beschreibung

Die Erfindung betrifft ein Wäschetrocknungsgerät mit einer Flusenrückhaltevorrichtung, aufweisend eine Flusenabscheideeinrichtung, welcher eine Flusenbenässungsvorrichtung vorgeschaltet ist.

Ein solches Wäschetrocknungsgerät geht hervor aus der EP 2 202 349 A2. Darin ist die Flusenabscheideeinrichtung ein Sieb und die Flusenbenässungsvorrichtung eine Reinigungseinrichtung, durch welche eine Reinigungsflüssigkeit über das Sieb leitbar ist.

Flusen werden typischerweise während eines Trocknungsprozesses von der zu trocknenden Wäsche in die umgebende Prozessluft abgegeben und umfassen beispielsweise bei einem Waschen oder Trocknen erzeugte Faserteile. Falls Sie nicht aus der Prozessluft entfernt werden, können sie sich an einem Prozessluft-Kondensator festsetzen, an welchem typischerweise aus der Wäschetrommel austretende warm-feuchte Prozessluft abgekühlt und dadurch auskondensiert wird. Durch das Absetzen der Flusen verringert sich die Wirkung des Prozessluft-Kondensators. Ein Reinigen des Prozessluft-Kondensators von den abgesetzten Flusen ist aufwändig und kann in der Regel nur durch Servicepersonal durchgeführt werden.

Um das Absetzen der Flusen an dem Prozessluft-Kondensator zu verhindern, ist es bekannt, strömungstechnisch eine Flusenabscheideeinrichtung in Form eines Gitterfilters im einem Prozessluftkanal zwischen der Wäschetrommel und dem Prozessluft-Kondensator anzuordnen. Aufgrund einer meist geringen Ausdehnung von Flusen von meist nur ca. einem Mikrometer können die Flusen die meisten Gitterfilter, welche typischerweise eine größere Gitterweite aufweisen, passieren. Gitterfilter mit einer geringeren Gitterweite weisen nachteiligerweise einen hohen Strömungswiderstand für die durchlaufende Prozessluft auf. Zudem müssen die Gitterfilter gelegentlich von (größeren) Flusen usw. gereinigt werden, was händisch von einem Endnutzer durchzuführen und aufwändig ist.

Auch ist aus EP 1 380 683 A2 oder DE 197 39 378 A1 die Verwendung einer Flusenabscheideeinrichtung in Form eines Zyklonabscheiders bekannt. Hierbei ist nachteilig, dass dessen Abscheidewirkung vergleichsweise gering ist, da eine effektive Dichte der sich in dem Prozessluftstrom befindlichen Flusen ähnlich der Dichte von Luft ist.

Aus der EP 0 535 348 A1 ist eine Flusenabscheideeinrichtung in Form eines Prozessluftwäschers bekannt, bei welcher die Prozessluft mit Kondensat beregnet wird und sich an den Kondensatvorhang anheftende Flusen aus der Prozessluft ausfallen. Jedoch ist eine solche Flusenabscheideeinrichtung vergleichsweise wenig effektiv und zudem baulich aufwändig.

Es ist die Aufgabe der vorliegenden Erfindung, die Nachteile des Standes der Technik zumindest teilweise zu überwinden und insbesondere eine verbesserte Möglichkeit zur Abscheidung von Flusen aus der Prozessluft eines Wäschetrocknungsgeräts bereitzustellen.

Diese Aufgabe wird für ein Wäschetrocknungsgerät gemäß den Merkmalen des unabhängigen Patentanspruchs gelöst. Bevorzugte Ausführungsformen und Weiterbildungen sind insbesondere den abhängigen Patentansprüchen entnehmbar, außerdem der nachfolgenden Beschreibung sowie der beigefügten Zeichnung.

Die Aufgabe wird demnach gelöst durch ein Wäschetrocknungsgerät mit einer Flusenrückhaltevorrichtung, aufweisend eine Flusenabscheideeinrichtung, welcher eine Flusenbenässungsvorrichtung vorgeschaltet ist. Dabei sind durch die Flusenbenässungsvorrichtung mittels Benässung von Flusen strömungstechnisch vor der Flusenabscheideeinrichtung Agglomerate aus Flusen und Wasser bildbar, und die Flusenbenässungsvorrichtung weist mindestens einen Dampferzeuger und/oder mindestens eine Vernebelungseinrichtung auf.

Durch die Benässung werden strömungstechnisch vor der Flusenabscheideeinrichtung Agglomerate aus Fluse(n) und Wasser gebildet. Diese Agglomerate können alleine deshalb schon einfacher und effektiver aus der Prozessluft entfernt werden als reine Flusen, da ihre räumliche Ausdehnung größer ist als bei reinen Flusen. Zudem verbessert das Wasser der

Agglomerate ein Anhaften an der Flusenabscheideeinrichtung, was eine Rückhaltung vereinfacht. Insgesamt werden so auch kleine Flusen einer effektiven und vergleichsweise einfachen Flusenrückhaltung zugänglich, und zwar auch mittels herkömmlicher Flusenabscheideeinrichtungen.

Erfindungsgemäß weist die Flusenbenässungsvorrichtung mindestens einen Dampferzeuger und/oder mindestens eine Vernebelungseinrichtung auf. Dadurch können Dampf und/oder kleine Wasserpartikel ("Nebelteilchen") mit hoher Dichte in einen Strom von flusenbehafteter Prozessluft eingebracht werden, was einen hohen Benetzungsgrad oder Benässungsgrad der Flusen und damit auch eine effektive Flusenrückhaltung oder Flusenabscheidung ermöglicht.

Der Dampferzeuger kann insbesondere ein Heißdampferzeuger oder ein Nassdampferzeuger sein.

Die Vernebelungseinrichtung kann insbesondere eine Sprüheinrichtung, ein Zerstäuber, insbesondere eine piezoaktorisch angetriebener Zerstäuber, oder eine Zentrifuge sein, insbesondere zur Erzeugung eines Aerosolnebels.

Bei der Benetzung oder Benässung werden der Dampf und/oder die Nebelteilchen an der Oberfläche der Flusen absorbiert. Aufgrund einer Oberflächenspannung des Wassers können sich berührende Agglomerate oder Flusen sich miteinander verbinden. Aus dem gleichen Grund wird eine Haftung oder Adhäsion der Agglomerate an nahezu jedem Ort beobachtet, auf den die Agglomerate auftreffen oder nicht benässte Flusen auf einen benässten Ort auftreffen.

Es ist noch eine bevorzugte Ausgestaltung, dass die Flusenabscheideeinrichtung einen Filterbeutel zum Zurückhalten benässter Flusen aufweist. Dieser weist den Vorteil auf, dass er preiswert ist, ein großes Fassungsvermögen aufweist und einfach zu reinigen ist. Zudem ermöglicht die längliche Ausdehnung eine ausreichende Zeitdauer zur effektiven Agglomeratbildung auch bei einer Einbringung von Dampf und/oder Nebelteilchen unmittelbar vor einer Öffnung des Filterbeutels. Durch die Agglomerate kann eine Porengröße vergleichsweise hoch sein, so dass eine Prozessluftströmung nicht wesentlich behindert wird.

Es ist eine weitere bevorzugte Ausgestaltung, dass die Flusenabscheideeinrichtung ein flaches Sieb zum Zurückhalten benässter Flusen aufweist. Das flache Sieb ist einfach zu reinigen. Das Sieb kann insbesondere ein metallisches Sieb, ein Gewebe oder ein Vlies sein.

Es ist noch eine bevorzugte Ausgestaltung, dass die Flusenbenässungsvorrichtung dazu eingerichtet ist, mindestens eine verwirbelte Strömung von Dampf und/oder Nebelteilchen zu erzeugen. Dies verbessert eine Bildung der Agglomerate. Zur Verwirbelung kann die Flusenbenässungsvorrichtung beispielsweise mit einer oder als mindestens eine Freistrahldüse oder Karmansche Wirbelstromerzeugungseinrichtung ausgebildet sein.

Es ist ferner eine bevorzugte Ausgestaltung, dass die Flusenabscheideeinrichtung einen Zyklonabscheider zum Abscheiden benässter Flusen aufweist. Die Agglomerate sind im Gegensatz zu einzelnen Flusen so schwer, dass sie sich vergleichsweise einfach aus der Prozessluft abtrennen lassen. Zudem haften die Agglomerate aufgrund der Adhäsion des Wassers gut an Wänden des Zyklonabscheiders, auf die sie auftreffen, was eine effektive Abscheidung oder Rückhaltung weiter unterstützt. Die Verwendung eines Zyklonabscheiders weist den Vorteil auf, dass er nicht gereinigt zu werden braucht, da er die Flusen in einem Flusen/Wasser-Gemisch (das sich z.B. durch ein Herunterrinnen der Agglomerate an den Wänden des Zyklonabscheiders ergibt) automatisch abführen kann und so auf eine Reinigung verzichtet werden kann, z.B. auf ein Entfernen von durch den Zyklonabscheider abgetrennten und folgend gesammelten Flusen, oder diese erheblich verkürzt werden kann.

Es ist auch eine bevorzugte Ausgestaltung, dass eine durch Flusen kontaktierbare Wand des Zyklonabscheiders gezielt angefeuchtet ist. Dies verbessert eine Anhaftung von Agglomeraten und freien Flusen (so noch vorhanden) und auch ein Herunterrinnen der Flusen zu ihrer Ausscheidung aus dem Zyklonabscheider.

Es ist eine für ein erleichtertes Herunterrinnen bevorzugte Ausgestaltung, dass eine durch benässte Flusen kontaktierbare Wand des Zyklonabscheiders mit einer Gleitschicht ausgerüstet ist. Die Gleitschicht mag insbesondere PTFE aufweisen, oder auch Nanostrukturen oder Nanopartikel, z.B. zur Herstellung eines Lotuseffekts.

Es ist außerdem eine bevorzugte Ausgestaltung, dass der Zyklonabscheider einen Prozesslufteinlass und einen dazu angewinkelt ausgerichteten Drucklufteinlass aufweist, so dass durch den Drucklufteinlass eintretende Druckluft mittels durch den Prozesslufteinlass einströmende, flusenbehaftete Prozessluft in eine Drehbewegung versetzt wird. Dies ermöglicht eine besonders starke Drehbewegung und damit Abscheidewirkung.

Es ist eine bevorzugte Weiterbildung, dass der Dampf und/oder die Nebelteilchen durch den Drucklufteinlass in die Flusenabscheideeinrichtung eingebracht werden oder zuführbar sind, was eine besonders gute Vermengung mit der flusenbehafteten Prozessluft ermöglicht. Ein Auslass der Flusenbenässungsvorrichtung mag also insbesondere in einen zu dem Drucklufteinlass führenden Druckluftkanal münden oder reichen. Alternativ mögen der und/oder die Nebelteilchen durch den Prozesslufteinlass in die Flusenabscheideeinrichtung eingebracht werden.

Alternativ mag die Prozessluft selbst eine Drehbewegung erzeugen, z.B. durch eine entsprechend gekrümmte Prozessluftführung in dem Zyklonabscheider.

Die Aufgabe wird auch gelöst durch ein Wäschetrocknungsgerät, aufweisend eine Wäschetrommel und einen Prozessluft-Kondensator, welche über einen Prozessluft führenden Prozessluftkanal verbunden sind, und aufweisend eine strömungstechnisch hinter der Wäschetrommel und vor dem Kondensator in dem Prozessluftkanal angeordnete Flusenabscheideeinrichtung, wobei strömungstechnisch hinter der Wäschetrommel und vor der Flusenabscheideeinrichtung eine Flusenbenässungsvorrichtung angeordnet ist.

Das erfindungsgemäße Wäschetrocknungsgerät ist den gleichen Vorteilen zugänglich wie die Flusenrückhaltevorrichtung und analog ausgestaltbar.

Das Wäschetrocknungsgerät kann insbesondere ein Wäschetrockner oder ein Waschtrockner sein.

Der Prozessluft-Kondensator kann beispielsweise ein Kühlwasserkondensator oder ein Verdampfer einer Wärmepumpe sein.

In den Figuren der beigefügten Zeichnung sind bevorzugte Ausführungsbeispiele der Erfindung schematisch dargestellt. Nachfolgend werden diese Ausführungsbeispiele genauer beschrieben. Dabei können zur Übersichtlichkeit gleiche oder gleichwirkende Elemente mit gleichen Bezugszeichen versehen sein. Es zeigen als Schnittdarstellungen in Seitenansicht:
- Fig.1: eine Skizze eines Wäschetrockners;
- Fig.2: eine Flusenabscheideeinrichtung gemäß einem ersten Ausführungsbeispiel; und
- Fig.3: eine Flusenabscheideeinrichtung gemäß einem zweiten Ausführungsbeispiel.

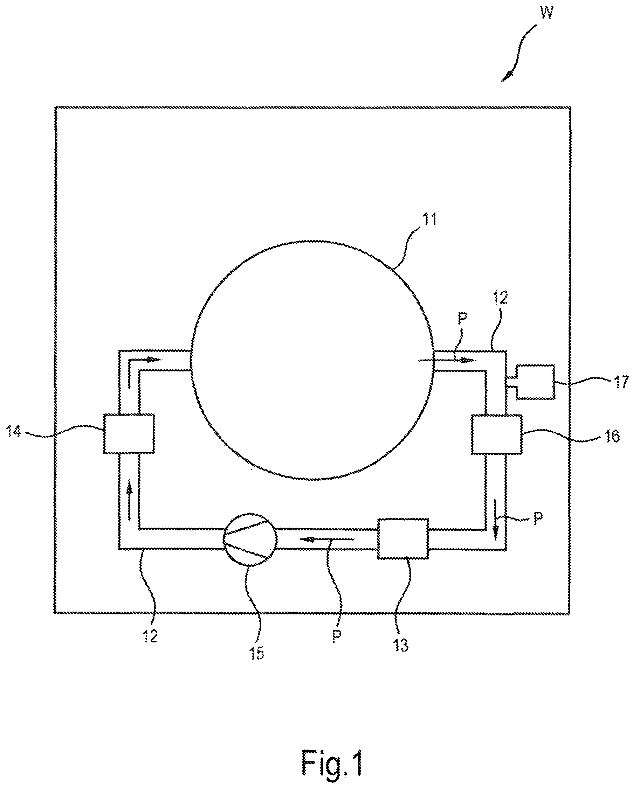

**Fig.1** zeigt als Schnittdarstellung in Seitenansicht eine Skizze eines Wäschetrocknungsgeräts in Form eines Umluft-Wäschetrockners W. Der Wäschetrockner W weist eine Wäschetrommel 11 zur Aufnahme von zu trocknender Wäsche (o.Abb.) auf. An die Wäschetrommel 11 ist ein umlaufender Prozessluftkanal 12 angeschlossen. Und zwar kann warm-feuchte Prozessluft P aus der Wäschetrommel 11 in den Prozessluftkanal 12 eintreten und strömt zu einem Prozessluft-Kondensator 13, welcher die Prozessluft P abkühlt und auskondensieren lässt, so dass sie folglich hinter dem Prozessluft-Kondensator 13 als kühl-trockene Prozessluft P vorliegt. Diese kühl-trockene Prozessluft P strömt weiter zu einer Heizung 14, in welcher sie aufgeheizt wird, um folgend als warm-trockene Prozessluft P wieder in die Wäschetrommel 11 eingeführt zu werden. Die warm-trockene Prozessluft P ist besonders geeignet, der Wäsche Feuchtigkeit zu entziehen. Die Strömung der Prozessluft P in dem Prozessluftkanal 12 wird mittels eines Gebläses 15 bewerkstelligt, welches hier beispielhaft zwischen dem Prozessluft-Kondensator 13 und der Heizung 14 in den Prozessluftkanal 12 eingeschaltet ist.

Zwischen der Wäschetrommel 11 und dem Prozessluft-Kondensator 13 befindet sich eine Flusenabscheideeinrichtung 16 zur Abscheidung oder Abtrennung von Flusen aus der Prozessluft P. Die Flusen werden typischerweise mit der in der Wäschetrommel 11 über die Wäsche streichenden Prozessluft P mitgerissen. Die Flusenabscheideeinrichtung 16 soll verhindern, dass die Flusen an den Prozessluft-Kondensator 13 gelangen und diesen wärmedämmend überziehen.

Der Wäschetrockner W weist eine strömungstechnisch vor der Flusenabscheideeinrichtung mit dem Prozessluftkanal 12 verbundene Flusenbenässungsvorrichtung 17 auf. Mittels der Flusenbenässungsvorrichtung 17 werden Wasserdampf und/oder Nebelteilchen vor der Flusenabscheideeinrichtung 16 in den Prozessluftkanal P eingebracht, um Agglomerate aus Wasser und Flusen zu erzeugen, welche Agglomerate sich durch die Flusenabscheideeinrichtung 16 erheblich besser zurückhalten lassen als einzelne (trockene) Flusen. In einer Variante können die Flusenabscheideeinrichtung 16 und die Flusenbenässungsvorrichtung 17 auch in einer gemeinsamen Baugruppe integriert sein.

Die Flusenbenässungsvorrichtung 17 kann beispielsweise einen Dampferzeuger und/oder eine Vernebelungseinrichtung (z.B. einen piezoelektrisch arbeitenden Aerosol-Erzeuger) aufweisen.

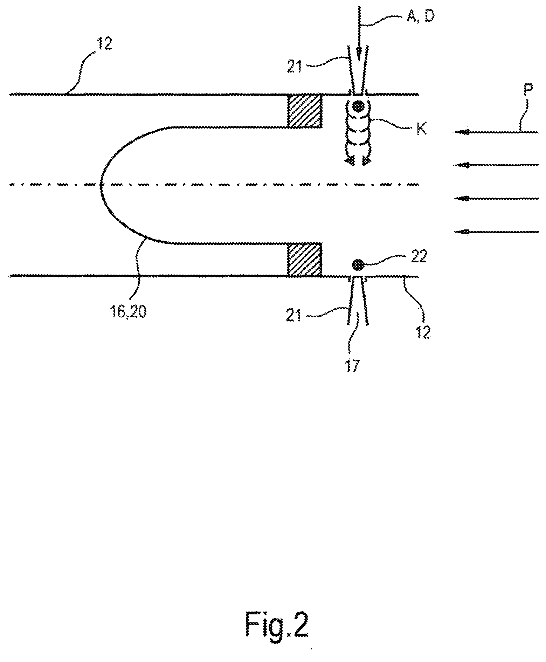

**Fig.2** zeigt als Schnittdarstellung in Seitenansicht eine mögliche Ausgestaltung der Flusenabscheideeinrichtung 16 gemäß einem ersten Ausführungsbeispiel. Die Flusenabscheideeinrichtung 16 weist hier einen Filterbeutel 20 zum Zurückhalten benässter Flusen auf. Strömungstechnisch vor dem Filterbeutel 20 münden mindestens zwei Düsenköpfe 21 der Flusenbenässungsvorrichtung 17 in den Prozessluftkanal 12, mittels welcher mittels Druckluft Dampf und/oder Nebelteilchen D in den Prozessluftkanal 12 eingebracht werden, um sich mit der flusenbehafteten Prozessluft P zu mischen und die Agglomerate zu bilden.

Strömungstechnisch hinter den Düsenköpfen 21 und damit hier im Prozessluftkanal 12 befindet sich jeweils ein Körper 22, welcher von dem Dampf und/oder den Nebelteilchen D umströmbar ist. Bei einer Umströmung bildet sich hinter den Körpers eine sog. Karmansche Wirbelstraße K mit gegenläufigen Wirbeln aus. Durch die Wirbel wird eine Durchmischung der Prozessluft P mit Dampf und/oder Nebelteilchen D und damit eine Agglomeratbildung verbessert. Aufgrund der in Strömungsrichtung der Prozessluft P länglichen Ausdehnung des Filterbeutels 20 ergibt sich eine für eine besonders effektive Vermischung ausreichend lange Strecke.

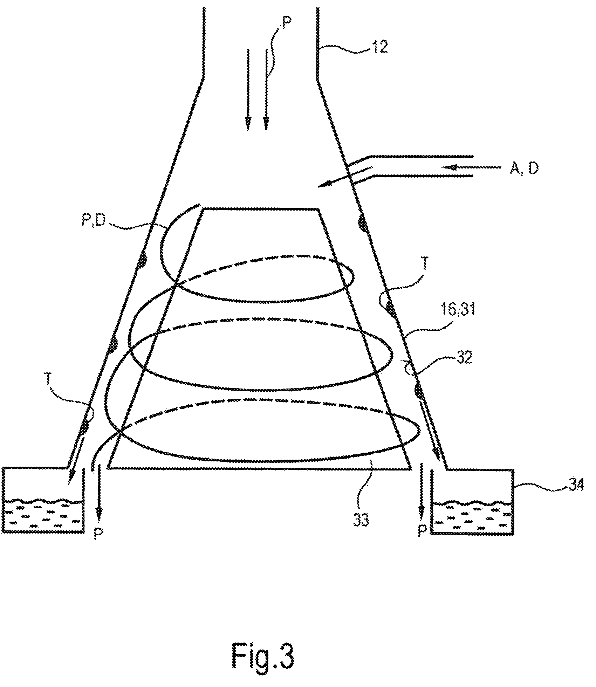

**Fig.3** zeigt als Schnittdarstellung in Seitenansicht eine weitere mögliche Flusenabscheideeinrichtung 16 gemäß einem zweiten Ausführungsbeispiel mit einem Zyklonabscheider 31. Dieser Zyklonabscheider 31 mag beispielsweise einen ähnlichen Grundaufbau wie ein in US 6,270,558 B1 beschriebener Zyklonabscheider aufweisen. Bei dem Zyklonabscheider 31 wird eintretende Prozessluft P mittels eines seitlich eingelassenen Druckluftstrahls A in Rotation versetzt, wobei die Prozessluft P in dem Zyklonabscheider 31 aufgrund einer kegelstumpfförmigen äußeren Wand 32 und eines darin angeordneten kegelstumpfförmigen Körpers 33 auf einer sich kegelstumpfförmig aufweitenden Spiralbahn läuft. Das Vorsehen des Körpers 33 bewirkt eine Aufrechterhaltung einer durchgängig hohen Geschwindigkeit und Rotationsenergie der Prozessluft P. Durch die Rotationskomponente der Prozessluft P werden schwerere Teilchen an die Wand 32 gedrückt und können so räumlich von der leichteren (reinen) Prozessluft P getrennt werden.

Bei dem gezeigten Zyklonabscheider 31 wird mit dem Druckluftstrahl A der durch die Flusenbenässungsvorrichtung 17 erzeugte Dampf und/oder Nebelteilchen D eingebracht. Die sich so bildenden Agglomerate höherer Masse werden durch die Rotationsbewegung (Zentrifugalkraft) effektiv an die Wand 32 geworfen und bleiben dort aufgrund der hohen Adhäsion von Wasser haften, bis sich genug Wasservolumen gesammelt hat, dass das Wasser mit den damit verbundenen Flusen herablaufen kann, z.B. als Wassertropfen T. Die Wassertropfen T können beispielsweise in einer Wanne 34 aufgefangen werden. Die aus dem Zyklonabscheider 31 austretende Prozessluft P ist hochgradig von Flusen befreit. Zudem dient der Zyklonabscheider 31 auch einer weiteren Trocknung der Prozessluft P, da von der Wäsche mitgenommene Feuchtigkeit sich ebenfalls an der Wand anlagern und folgend abtropfen kann.

Zur einfacheren Sammlung von Wassertropfen T mag die Wand 32 zumindest an ihrer durch die Agglomerate benetzbaren Oberseite mit einer Gleitschicht ausgerüstet sein, z.B. aus PTFE, Nanostrukturen oder Nanopartikeln, z.B. zur Herstellung eines Lotuseffekts.

Selbstverständlich ist die vorliegende Erfindung nicht auf die gezeigten Ausführungsbeispiele beschränkt. So kann in einem Zyklonabscheider z.B. auch auf den Körper 33 verzichtet werden. Auch mag der Zyklonabscheider eine gezielt benässte Wand aufweisen, wozu beispielsweise eine Berieselungsanlage einsetzbar sein mag. Allgemein mag die Flusenbenässungsvorrichtung durch an dem Prozessluft-Kondensator ausfallendes Kondensat gespeist werden.

### Bezugszeichenliste

- 11: Wäschetrommel
- 12: Prozessluftkanal
- 13: Prozessluft-Kondensator
- 14: Heizung
- 15: Gebläse
- 16: Flusenabscheideeinrichtung
- 17: Flusenbenässungsvorrichtung
- 20: Filterbeutel
- 21: Düsenkopf
- 22: Umströmbarer Körper
- 31: Zyklonabscheider
- 32: Wand
- 33: Kegelstumpfförmiger Körper
- 34: Wanne
- A: Druckluftstrahl
- D: Dampf und/oder Nebelteilchen
- K: Karmansche Wirbelstraße
- P: Prozessluft
- T: Wassertropfen
- W: Wäschetrockner

## Patentansprüche

1. Wäschetrocknungsgerät (W) mit einer Flusenrückhaltevorrichtung (16, 17), aufweisend eine Flusenabscheideeinrichtung (16), welcher eine Flusenbenässungsvorrichtung (17) vorgeschaltet ist, **dadurch gekennzeichnet, dass** durch die Flusenbenässungsvorrichtung (17) mittels Benässung von Flusen strömungstechnisch vor der Flusenabscheideeinrichtung (16) Agglomerate aus Flusen und Wasser bildbar sind, wobei die Flusenbenässungsvorrichtung (17) mindestens einen Dampferzeuger und/oder mindestens eine Vernebelungseinrichtung aufweist.

2. Wäschetrocknungsgerät (W) nach Anspruch 1, wobei die Flusenabscheideeinrichtung (16) einen Filterbeutel (20) zum Zurückhalten benässter Flusen aufweist.

3. Wäschetrocknungsgerät (W) nach Anspruch 1, wobei die Flusenabscheideeinrichtung (16) ein flaches Sieb zum Zurückhalten benässter Flusen aufweist.

4. Wäschetrocknungsgerät (W) nach einem der Ansprüche 2 und 3, wobei die Flusenbenässungsvorrichtung (17) dazu eingerichtet ist, mindestens eine verwirbelte Strömung (K) von Dampf und/oder Nebelteilchen (D) zu erzeugen.

5. Wäschetrocknungsgerät (W) nach Anspruch 1, wobei die Flusenabscheideeinrichtung (16) einen Zyklonabscheider (31) zum Abscheiden benässter Flusen aufweist.

6. Wäschetrocknungsgerät (W) nach Anspruch 5, wobei eine durch benässte Flusen kontaktierbare Wand (32) des Zyklonabscheiders (31) angefeuchtet ist.

7. Wäschetrocknungsgerät (W) nach einem der Ansprüche 5 und 6, wobei eine durch benässte Flusen kontaktierbare Wand (32) des Zyklonabscheiders (31) mit einer Gleitschicht ausgerüstet ist.

8. Wäschetrocknungsgerät (W) nach einem der Ansprüche 5 bis 7, wobei der Zyklonabscheider (31) einen Prozesslufteinlass und einen dazu angewinkelt ausgerichteten Drucklufteinlass aufweist, so dass durch den Drucklufteinlass eintretende Druckluft (A) durch den Prozesslufteinlass einströmende, flusenbehaftete Prozessluft (P) in eine Drehbewegung versetzt.

9. Wäschetrocknungsgerät (W) nach Anspruch 8, wobei von der Flusenbenässungsvorrichtung (17) erzeugter Dampf und/oder Nebelteilchen (D) der Prozessluft (P) durch den Drucklufteinlass zuführbar ist.

10. Wäschetrocknungsgerät (W) nach einem der vorigen Ansprüche, wobei das Wäschetrocknungsgerät (W) eine Wäschetrommel (11) und einen Prozessluft-Köndensator (13), welche über einen Prozessluft (P) führenden Prozessluftkanal (12) verbunden sind, und die strömungstechnisch hinter der Wäschetrommel (11) und vor dem Prozessluft-Kondensator (13) in dem Prozessluftkanal (12) angeordnete Flusenrückhaltevorrichtung (16, 17) aufweist, wobei strömungstechnisch hinter der Wäschetrommel (11) und vor der Flusenabscheideeinrichtung (16) die Flusenbenässungsvorrichtung (17) angeordnet ist.

## Claims

1. Laundry drying appliance (W) with a fluff retention apparatus (16, 17) having a fluff separator (16), upstream of which a fluff wetter (17) is connected, **characterised in that** through the fluff wetter (17) conglomerations of fluff and water can be formed by means of fluff wetting upstream of the fluff separator (16) for flow purposes, wherein the fluff wetter (17) has at least one vapour generator and/or at least one vaporiser.

2. Laundry drying appliance (W) according to claim 1, wherein the fluff separator (16) has a filter bag (20) for retaining wet fluff.

3. Laundry drying appliance (W) according to claim 1, wherein the fluff separator (16) has a flat sieve for retaining wet fluff.

4. Laundry drying appliance (W) according to one of claims 2 and 3, wherein the fluff wetter (17) is designed to generate at least one eddying flow (K) of vapour and/or mist particles (D).

5. Laundry drying appliance (W) according to claim 1, wherein the fluff separator (16) has a cyclone separator (31) for separating wet fluff.

6. Laundry drying appliance (W) according to claim 5, wherein a wall (32) of the cyclone separator (31) that can be brought into contact with wet fluff is moistened.

7. Laundry drying appliance (W) according to one of claims 5 and 6, wherein a wall (32) of the cyclone separator (31) that can be brought into contact with wet fluff is provided with an easy-slide coating.

8. Laundry drying appliance (W) according to one of claims 5 to 7, wherein the cyclone separator (31) has a process air inlet and a pressurised air inlet aligned at an angle thereto, so that pressurised air (A) entering through the pressurised air inlet is made to move in a rotating manner by process air (P) containing fluff, which flows in through the process air inlet.

9. Laundry drying appliance (W) according to claim 8, wherein vapour and/or mist particles (D) generated by the fluff wetter (17) can be fed into the process air (P) through the pressurised air inlet.

10. Laundry drying appliance (W) according to one of the preceding claims, wherein the laundry drying appliance (W) has a laundry drum (11) and a process air condenser (13), which are connected by way of a process air channel (12) conducting process air (P), and having a fluff separator (16, 17), disposed in the process air channel (12) for flow purposes downstream of the laundry drum (11) and upstream of the process air condenser (13), wherein the fluff wetter (17) is disposed for flow purposes downstream of the laundry drum (11) and upstream of the fluff separator (16).

## Revendications

1. Sèche-linge (W) comportant un dispositif de retenue des peluches (16, 17), comprenant un dispositif de séparation des peluches (16) qui est raccordé à un dispositif d'humidification des peluches (17), **caractérisé en ce que** grâce au dispositif d'humidification des peluches (17) on peut constituer, au moyen d'une humidification des peluches, des agglomérats de peluches et d'eau, du point de vue fluidique en amont du dispositif de séparation des peluches (16), le dispositif d'humidification des peluches (17) comprenant au moins un générateur de vapeur et/ou au moins un dispositif à rideau de brouillard.

2. Sèche-linge (W) selon la revendication 1, dans lequel le dispositif de séparation des peluches (16) comprend une poche de filtrage (20) pour la retenue des peluches humidifiées.

3. Sèche-linge (W) selon la revendication 1, dans lequel le dispositif de séparation des peluches (16) comprend un tamis plat pour la retenue des peluches humidifiées.

4. Sèche-linge (W) selon l'une des revendications 2 et 3, dans lequel le dispositif d'humidification des peluches (17) est agencé pour engendrer au moins un écoulement tourbillonnaire (K) de vapeur et/ou de particules de brouillard (D).

5. Sèche-linge (W) selon la revendication 1, dans lequel le dispositif de séparation des peluches (16) comprend un séparateur à cyclone (31) pour la séparation des peluches humidifiées.

6. Sèche-linge (W) selon la revendication 5, dans lequel une paroi (32) du séparateur à cyclone (31) pouvant entrer en contact avec des peluches humidifiées est humectée.

7. Sèche-linge (W) selon l'une des revendications 5 et 6, dans lequel une paroi (32) du séparateur à cyclone (31) pouvant entrer en contact avec des peluches humidifiées est revêtue d'une couche de glissement.

8. Sèche-linge (W) selon l'une des revendications 5 à 7, dans lequel le séparateur à cyclone (31) comprend une entrée d'air de traitement et une entrée d'air comprimé dirigée en enroulement, de sorte que grâce à l'air comprimé (A) entrant par l'entrée d'air comprimé, un mouvement de rotation est produit sur l'air de traitement (P) chargé en peluches, entraîné par l'entrée d'air de traitement.

9. Sèche-linge (W) selon la revendication 8, dans lequel la vapeur et/ou les particules de brouillard engendrées par le dispositif d'humidification des peluches (17) de l'air de traitement (P) peuvent être entraînées par l'entrée d'air comprimé.

10. Sèche-linge (W) selon l'une des revendications précédentes, dans lequel le sèche-linge (W) comprend un tambour de lavage (11) et un condenseur d'air de traitement (13) qui sont reliés par un canal d'air de traitement (12) conduisant l'air de traitement (P), et comprend le dispositif de retenue des peluches (16, 17) disposé, du point de vue fluidique, en aval du tambour de lavage (11) et en amont du condenseur d'air de traitement (13), le dispositif d'humidification des peluches (17) étant disposé, du point de vue fluidique, en aval du tambour de lavage (11) et en amont du dispositif de séparation des peluches (16).
